(19) **Europäisches Patentamt**

**European Patent Office**

**Office européen des brevets**

(11) **EP 0 956 314 B1**

(12) **EUROPÄISCHE PATENTSCHRIFT**

(45) Veröffentlichungstag und Bekanntmachung des Hinweises auf die Patenterteilung:
**18.10.2000 Patentblatt 2000/42**

(51) Int Cl.⁷: **C08K 5/136**, C08K 5/375,
C08J 3/22, C08K 5/06

(21) Anmeldenummer: **99903610.6**

(22) Anmeldetag: **08.01.1999**

(86) Internationale Anmeldenummer:
**PCT/EP99/00068**

(87) Internationale Veröffentlichungsnummer:
**WO 99/37710 (29.07.1999 Gazette 1999/30)**

(54) **Abfallbehälter mit Biozid.**

Refuse containers with biocide.

Conteneurs pour déchets avec un biocide.

(84) Benannte Vertragsstaaten:
**AT BE CH CY DE DK ES FI FR GB GR IE IT LI LU MC NL PT SE**

(30) Priorität: **22.01.1998 DE 19802142**

(43) Veröffentlichungstag der Anmeldung:
**17.11.1999 Patentblatt 1999/46**

(73) Patentinhaber: **Gebr. Otto GmbH & Co. KG**
**50968 Köln (DE)**

(72) Erfinder: **BEESE, Ulrich**
**D-16818 Wustrau (DE)**

(74) Vertreter: **Sieckmann, Ralf, Dr. et al**
**Schumannstrasse 97.99**
**40234 Düsseldorf (DE)**

(56) Entgegenhaltungen:
**WO-A-98/51189          DE-A- 2 640 473**
**GB-A- 871 228**

**Beschreibung**

Die Erfindung betrifft einen Abfallbehälter aus einer Polymerzusammensetzung sowie die Verwendung von Phenolen als Biozid in derartigen Behältnissen.

Die US-A-3 075 940 betrifft ein sterisch gehindertes Phenol insbesondere in Form eines halogenierten Dihydroxydiphenylmethans, welches zur Stabilisierung von Weich-PVC dient.

Die GB-A-1 511 495 betrifft gemäß Anspruchssatz den Einsatz von 0,1 bis 3 Gew.-% eines speziellen halogenierten Dihydroxydiphenylsulfids als Stabilisator von Polymeren, ausgewählt aus Polypropylen oder anderen Polyolefinen, PVC oder ABS. Der dort genannte Stabilisator ist explizit vom Schutzbegehren ausgeschlossen, insbesondere da dort nur ein Einsatz als Antioxydanz oder als Metall deaktivierendes Mittel in der Kunststoffmischung vorgesehen ist.

Die DE-A-196 51 445 betrifft den Einsatz von Bisphenolen, wie sie auch im neuen Anspruch 1 definiert worden sind als Monomeres zur Herstellung von Polycarbonatpolycyclen, wie der Formel VII auf Seite 4, Zeile 38 bis 66 zu entnehmen ist. Ob und wieviel dieser Monomere sich schließlich noch in Polymeren befinden, wird dort nicht im einzelnen angegeben.

Die EP-B-112 542 betrifft gemäß Hauptanspruch Polyamid Formmassen, welche 0,5 bis 15 Gew.-%, bezogen auf Polyamid wenigstens eines Monophenols enthalten.

Die US-A-5 367 025 betrifft eine vernetzbare polyethylenhaltige Zusammensetzung, welche u.a. zu Behältern weiterverarbeitet werden kann und welche neben den Polyolefinen ein Vernetzungsmittel in Form eines organischen Peroxid-Initiators, wenigstens 0,2 Gew.-% eines Polyalkylenbenzolpolycarbonats sowie 0,2 bis 2 Gewichtsteile bezogen, auf 100 Teile des Ethylenpolymers eines geeigneten Vernetzungs-Coreagenzes enthält, wobei diese Verbindung ausgewählt ist aus sterisch gehinderten Phenolantioxidanzien, wobei allerdings ausschließlich nicht halogenierte Antioxidanzien in Spalte 4, Zeile 52 bis 64 genannt sind.

US-A-5 298 540 betrifft gemäß Hauptanspruch ein Verfahren zur Stabilisierung von recyclierten Mischungen von thermoplastischen Polymeren, wobei diese Mischung 55 bis 75 Gew.-% Polyolefine, 5 bis 25 % Gew.-% Polystyrol, 5 bis 15 Gew.-% PVC und bis 10 Gew.-% anderer plastischer Polymere enthält, wobei diese Mischung mit einer Kombination von wenigstens einem sterisch gehinderten Phenol und wenigstens einem Phosphit oder Phosphonit kontaktiert wird. Die einzig sterisch gehinderten Phenole, die in dem Patent genannt sind, weisen gemäß Spalte 3, oben, eine charakteristische halogenfreie Tertiobutylphenol-Gruppe auf.

Ullmanns Encyklopädie der technischen Chemie, dritte Auflage, 5. Band beschreibt auf Seite 757 den Einsatz von mehrwertigen Phenolen, allerdings ohne darauf hinzuweisen, daß sie Gegenstand einer Polymerzusammensetzung eines Abfallbehälters sind.

Ullmann' s Encyclopedia of Industrial Chemistry, 5. Edition, Volume A3, beschreibt im Aufsatz über Antioxidantien auch die Klasse der gehinderten Phenole, die Tabelle 3 zeigt allerdings keinen Vertreter eines halogenierten Dihydroxydiphenylmenthans, -sulfids oder -ethers.

Es ist bereits bekannt, Phenole als Desinfektionsmittel, d.h. zur Vernichtung von Krankheitserregern und zum Schutz von Pflanzen, Materialien und Lebensmitteln gegen mikrobiellen Befall einzusetzen. Dies geschieht üblicherweise dadurch, daß das Desinfektionsmittel dem zu schützenden Material Wasser entzieht, Eiweiß denaturiert und sonstige Proteinveränderungen vornimmt, während andere Desinfektionsmittel Stoffwechselvorgänge im Zellinneren blockieren. Die hier insbesondere interessante Klasse der halogenierten Dihydroxydiphenylmethane, -sulfide und -ether, werden speziell als Zusatz für desodorierende und keimwidrige Toilettenseifen, Körperpflegemittel und Reinigungsmittel eingesetzt. Derartige Substrate weisen in den meisten Fällen Schmelzpunkte weit oberhalb von 100 °C auf. Insbesondere unter der Bezeichnung Irgasan® DP 300 wird ein Antimikrobikum für kosmetische Präparate von der Ciba-Geigy, Basel angeboten, wobei es sich um das 2,4,4'-Trichlor-2'-hydroxy-diphenylether bzw. das 5-Chlor-2-(2,4-dichlorphenoxy)phenol oder Triclosan (INN) handelt. Außer dem klassischen Einsatz bei Kosmetika wird dieses Produkt auch im Zusammenhang mit Arzneimitteln und Medicalprodukten eingesetzt, besonders im Dentalbereich. Eine weitere Verbreitung findet es auch in der antimikrobiellen Ausrüstung von Textilfasern und Kunststoffen, sowie als Zusatz, um die Verkeimung von Wasser, wässerigen Lösungen oder Luft in technischen Anlagen beispielsweise Klimaanlagen zu verhindern.

Weiterhin ist aus Ullmanns Enzyklopädie der technischen Chemie, 5. Auflage, Band 21, 1985, Seite 46 ff. bekannt, daß Kunststoffe selbst von Mikroorganismen nicht angegriffen werden. Dagegen wäre es vorteilhaft, bei Mehrweg-Behältnissen, die zur Lagerung von Lebensmitteln oder von Bioabfällen bestimmt sind, die Verschleppung und Ausbreitung von Mikroorganismen zu verhindern.

GB-A-871228 offenbart eine Polyolefinzusammensetzung mit einem Gehalt an einem Phenol von 0,1 bis 5 Gew.-%. Diese Zusammensetzungen dienen zur Herstellung von Behältern.

Hiermit wird allerdings weder offenbart noch nahegelegt, einen Abfallbehälter für eine Polymerzusammensetzung mit einem gewissen Gehalt an speziellen Phenolen bereitzustellen, sowie Phenole in derartigen Kunststoff enthaltenden Behältnissen als Biozid einzusetzen.

DE-A-2640473 offenbart die Herstellung von bakteriostatischen Kunststoffen, wie Polyethylen, Polystyrol oder SAN durch Zusatz von Verbindungen wie Hexachlorophen oder Triclosan. Diese Zusammensetzungen können nicht nur zur Herstellung von kleinen Behältern, wie Trinkbechern, verwendet werden, sondern auch zur Herstellung von Verpackungsmaterial für Lebensmittel im allgemeinen. Hierdurch wird aber weder offenbart noch nahegelegt, einen Abfallbehälter aus einer speziellen Polymerzusammensetzung bereitzustellen, dem spezielle Mengen an speziellen Phenolen beigemengt sind sowie die Verwendung dieser speziellen Phenole in derartigen Kunststoff enthaltenden Abfallbehältnissen als Biozid.

Der vorliegenden Erfindung liegt die Aufgabe zugrunde, einen Abfallbehälter aus einer Polymerzusammensetzung mit desinfizierender Wirkung bereitzustellen, der insbesondere in Behältnissen eingesetzt werden kann, bei denen eine desinfizierende Wirkung eine Rolle spielt.

Gegenstand der vorliegenden Erfindung ist schließlich die Verwendung von Phenolen als Biozid in Kunststoff enthaltenden Behältnissen.

Es wurde überraschend gefunden, daß durch den Einsatz einer speziellen Menge eines bisher nur im Kosmetik- und klassischen Desinfektionsbereich eingesetzten Phenols, eine materialschützende, d.h. desinfizierende Wirkung im Zusammenhang mit den vorgenannten speziellen Polymerzusammensetzungen erzielt werden kann.

Die vorliegende Erfindung betrifft somit einen Abfallbehälter aus einer Polymerzusammensetzung, dadurch gekennzeichnet, daß das Polymer ausgewählt ist aus Polyolefinen, Styrolpolymerisaten, halogenhaltigen Polymeren ausgenommen Weich-PVC, linearen Polyestern, linearen Polycarbamaten, hochtemperaturfesten Kunststoffen sowie Recyklaten dieser Kunststoffsorten, wobei sie 0,01 bis 10 Gew-%, vorzugsweise 0,05 bis 2 Gew-%, bezogen auf die Gesamtzusammensetzung, wenigstens ein Phenol in Form von halogeniertem Dihydroxydiphenylmethan, -sulfid und / oder -ether und / oder 2,4,4'-Trichlor-2'-hydroxydiphenylether enthält, ausgenommen die Dihydroxydiphenylsulfide, 2,2'-Thiobis(6-halogeno-4-C$_{1-8}$-alkylphenol) und 2,2'-Thiobis(6-halogeno-4-C$_{2-8}$-alkenylphenol).

Eine bevorzugte Gruppe der eingesetzten Phenole sind die halogenierten Dihydroxydiphenylmethane, -sulfide und -ether und/oder 2,4,4'-Trichlor-2'-hydroxydiphenylether, die beispielsweise ausgewählt sind aus 5,5'-Dichlor-2,2'-dihydroxy-diphenylmethan (Preventol DD, Bayer AG), 3,5,3',5'-Tetrachlor-4,4'-dihydroxy-diphenylmethan (Monsanto Corporation), 3,5,6,3',5',6'-Hexachlor-2,2'-dihydroxy-diphenylmethan (Hexachlorophen), 5,5'-Dichlor-2,2'-dihydroxy-diphenylsulfid (Novex, Boehringer Mannheim), 2,4,5,2',4',5'-Hexachlor-dihydroxy-diphenylsulfid, 3,5,3',5'-Tetrachlor-2,2'-Dihydroxy-diphenylsulfid, (Actamer, Monsanto), 4,4'-Dihydroxy-2,2'-dimethyl-diphenylmethan, 2,4,4'-Trichlor-2'-hydroxydiphenylether (Irgasan DP 300, Ciba-Geigy).

Von den vorgenannten Phenolgruppen hat sich das vorgenannte 2,4,4'-Trichlor-2'-hydroxy-diphenylether als besonders bevorzugt erwiesen, welches

aufgrund seines hohen LD$_{50}$ Wertes praktisch ungiftig ist und auch im Körper nicht angereichert wird.

Aufgrund seines hohen Zersetzungspunktes von oberhalb 280 °C kommt es auch praktisch während der Einbringung dieses Substrates in den Masterbatch oder in die Polymerzusammensetzung nicht zu einer Zersetzung oder zu einem nennenswerten Übergang in die Gasphase.

Das vorgenannte Phenoladditiv soll einer Polymerzusammensetzung zugefügt werden. Bei dieser Polymerzusammensetzung ist das Polymer ausgewählt aus Polyolefinen, Styrolpolymerisaten, halogenhaltigen Polymeren (ausgenommen Weich-PVC), linearen Polyestern, linearen Polycarbamaten, hochtemperaturfesten Kunststoffen sowie Recyklaten dieser Kunststoffsorten.

Unter Polyolefinen, die im Sinne der vorliegenden Erfindung eingesetzt werden, versteht man zunächst Polyethylen und die Unterarten des Polyethylens, nämlich das LDPE mit typischen Dichten von 0,918 bis 0,950 g/dm$^3$, das HDPE mit einer typischen Dichte von 0,95 bis 0,96 g/dm$^3$, spezielle Copolymere des Ethylens wie das LLDPE, EVA, EBA, EEA, EAS, EVK sowie ETFE, Mischungen von Polyethylen mit anderen Polymeren, eine chemische Abwandlung des Polyethylens in Form des PEC, CSM und VPE. Weiterer wichtiger Vertreter der Polyolefine ist das Polypropylen, die Copolymere und Polyblends des Polypropylens, wie das EPB, das EPDM, das EPM sowie das EPTR. Weitere Mitglieder der Polyolefine sind das Polybuten, das Polymethylpenten sowie Polyisobutylen.

Bei den als Polymer eingesetzten Styrolpolymerisaten ist sowohl das Polystyrol selbst zu nennen wie auch die Copolymere des Styrols und Polyblends, wie beispielsweise die statistischen Polymere SAN, ASVK, SAS, BS, Pfropfcopolymere und Polyblends als schlagzähe amorphe Thermoplaste wie SB, ABS, MBS, MABS, ASA, ACS, AES sowie ES, 3-Block-Copolymere als thermoplastische Elastomere wie SBS, SIS und SEPS.

Als halogenhaltige Polymere in den vorgenannten Polymerzusammensetzungen können zunächst PVC selbst, also das sogenannte Hart-PVC, Polyblends mit PVC als schlagzähe PVC-Typen, wie beispielsweise ACVC/PVC, EVA/PVC, MBS/PVC, PEC/PVC und ABS/PVC eingesetzt werden. Weiterhin finden statistische Copolymere, wie beispielsweise VCVAC, VCS, VCAN und VCVDC Anwendung. Weitere halogenhaltige Polymere sind das Polyvinylidenchlorid, Polyvinylidenfluorid und Polyvinylfluorid.

Unter den weiteren in dem erfindungsgemäßen Abfallbehälter aus Polymerzusammensetzungen eingesetzten linearen Polyestem versteht man zunächst das Polyethylenterephthalat, das Polybutylenterephthalat, Blockcopolymere als thermoplastische Elastomere sowie die Polycarbonate.

Eine weitere erfindungsgemäß in den Abfallbehältern eingesetzte Kunststoffgruppe betrifft lineare Polycarbamate, worunter man die durch Additionspolymerisation als Stufenreaktion von Di- oder Polyhydroxyverbindungen an Di- oder Polyisocyanate hergestellten Polyurethane versteht.

Schließlich sind noch die hochtemperaturfesten Kunststoffe für den erfindungsgemäßen Einsatz in den Abfallbehälterpolymerzusammensetzungen zu nennen, wie beispielsweise das Polyphenylen, das Poly-p-xylylen, das Polyphenylenoxid-Polystyrol, das Polysulfon, das Polyethersulfon, das Polyphenylensulfid, das Polyphenylensulfon, das Polymethacrylimid, das Polyimid, das Polyesterimid und das Polyetherimid. Anstelle der vorgenannten Kunststoffklassen können auch die entsprechenden, im Rahmen eines Recyclingverfahrens wiedergewonnen, nach Stoffklassen getrennten, Kunststoffe eingesetzt werden.

Besonders bevorzugt ist es, im Rahmen der vorgenannten Polymerzusammensetzung ein Polyethylen und hier speziell ein HD-PE einzusetzen. Besonders bevorzugt ist es, in dieser Polymerzusammensetzung den Anteil des Phenols mit 0,1 bis 2 Gew-% und speziell mit 0,2 bis 0,5 Gew-% einzusetzen.

Hierbei versteht sich von selbst, daß die vorgenannte Polymerzusammensetzung außer dem reinen Kunststoff auch die üblichen in Kunststoff vorhandenen Hilfs- und Zusatzstoffe aufweist, beispielsweise Füllstoffe und/oder Farbstoffe in Form von organischen und anorganischen Pigmenten. Diese Hilfs- und Zusatzstoffe sind in der Zusammensetzung in Mengen von 0,5 bis 5 Gew-%, vorzugsweise 1 bis 2 Gew-%, bezogen auf die Gesamtzusammensetzung, vorhanden. Zu den vorgenannten Hilfs- und Zusatzstoffen gehören natürlich auch die üblichen Additive, wie Lichtschutzmittel, wie beispielsweise UV-Absorber, oder Antistatika, und Thermostabilisatoren. Beispiele für Füllstoffe im Lager und Transportbereich sind Kreide, Talkum, Glasfasern.

Beispiele für Pigmente sind Furanruß, Chromoxidgrün, Siliziumdioxid, Titandioxid und Phthalocyanine.

Beispiel für Lichtschutzadditiv ist HALS.

Beispiel für Thermostabilisatoren sind Verbindungen auf Basis von (3,5-Di-tert.-butyl-4-hydroxyphenyl)-propionsäureerstern beispielsweise des Pentaerythrits oder des Octadecanols, welche von der Ciba Geigy unter der Bezeichnung Irganox® vertrieben werden.

Die vorgenannten Abfallbehälter können aus einem Polymer-Masterbatch, der 0,1 bis 20 Gew-%, vorzugsweise 1 bis 5 Gew-%, bezogen auf die Gesamtzusammensetzung dieses Masterbatchs, wenigstens eines Phenols enthält, erhalten werden. Das vorgenannte Masterbatch wird vorzugsweise in Form eines Granulats hergestellt, wobei sich, wie vorstehend erörtert, die qualitative Zusammensetzung des Phenols und die qualitative Zusammensetzung des Polymers wie in der vorgenannten Polymerzusammensetzung gestalten können. Die bereits genannten weiteren Additive im Masterbatch sind in 1 bis 50 Gew-%, bevorzugt 1 bis 5 Gew-% bezogen auf die Gesamtzusammensetzung, enthalten.

Die vorgenannten Masterbatche werden in der Weise hergestellt, daß ein Basis-Polymergranulat gemeinsam mit den Additiven auf ihre Schmelztemperatur erhitzt und anschließend granuliert werden. Dies geschieht beispielsweise, indem man die Komponenten in einem Rhönradmischer intensiv durchmischt und dann in einem handelsüblichen Granulator aufschmilzt und granuliert. Zur Herstellung der Fertigteile wird dann dem Basispolymer mit Hilfe spezieller Dossiereinrichtungen (gravimetrisch bzw. volumetrisch) eine entsprechende Menge Masterbatch hinzugefügt.

Die Weiterverarbeitung der vorgenannten Polymerzusammensetzung zu Abfallbehältern erfolgt in an sich bekannter Weise durch Spritzgießen, durch Rotationsguß, durch Spritzblasverfahren, sonstige herkömmliche Extrusionsverfahren sowie Hohlkörperblasverfahren.

Setzt man als Ausgangsstoff eines der genannten Basis-Polymere ein, so erfolgt die Weiterverarbeitung zu den erfindungsgemäßen Abfallbehältern durch Zusatz des entsprechenden Phenol enthaltenden Polymer-Masterbatch-Granulats, welche durch die vorgenannten Verfahren, insbesondere Spitzgießverfahren oder Spritzblasverfahren zu den Abfallbehältnissen weiterverarbeitet werden können.

Weiterer Gegenstand der vorliegenden Erfindung ist die Verwendung von Phenolen als Biozid in Kunststoff enthaltenden Behältnissen.

Unter Behältnissen im Sinne der vorliegenden Erfindung versteht man Entsorgungsbehälter wie im DIN EN 840 1-6 beschrieben.

Weiterhin versteht man hierunter auch die Entsorgungsbehältnisse, wie sie beispielsweise im Haushalt in Form der typischen 10 Liter-Behälter und im Abfallbereich in der typischen 120 Liter-Größe für Abfalltonnen eingesetzt werden. Weiterhin wird im Rahmen der erfindungsgemäßen Verwendung unter einem Abfallbehältnis auch ein Vorsortier oder Zwischenlagerbehälter für Bioabfälle verstanden, wie er beispielsweise aus Recyclingmaterial hergestellt wird. Derartige Behälter haben typischerweise Volumina in der Größenordnung von 10 bis 1000 Liter, vorzugsweise 100 bis 250 Liter.

Im Rahmen der vorgenannten Verwendung ist es bevorzugt, daß die Phenole in einer Menge von 0,01 bis 10 Gew-%, vorzugsweise 0,05 bis 2 Gew-%, bezogen jeweils auf die Gesamtzusammensetzung, entweder bereits in dem Kunststoff enthaltendem Material bzw. entsprechender Menge in dem Polymer-Masterbatch-Granulat enthalten sind.

Die vorliegende Erfindung wird nunmehr durch Ausführungsbeispiele näher erläutert:

Als Prüfkörper wurden 6 mm Scheiben in 3 mm Materialstärke für die mikrobiologischen Versuche und 20 x 20 mm Platten der gleichen Materialstärke für die Migrationsversuche, jeweils ohne und mit Irgasan DP 300 eingesetzt.

Für die Konzentrationsbestimmung durch Hemmhofteste wurden Klebsiella pneumoni, (ATCC 4352) und Staphylococcus aureus (ATCC 6538) auf Casein-Sojamehl-Bouillon (CM, Oxoid) angezüchtet, dann auf Caseinpepton-Sojamehl-Agar (CM 131, Oxoid) ausplattiert und bei 37 °C inkubiert. Bis zu 50 µl Irgasan DP 300 wurden auf 6 mm Filterscheiben appliziert.

Für die UV spektroskopische Konzentrationsbestimmung bei einer Wellenlänge 285 nm wurde ein Hitachi U-1100 Spektralphotometer in Verbindung mit reduzierten Acrylkuvetten (Produkt-Nr. 67.740, Sarstedt) mit 500 µl Probevolumen verwendet.

Die Berechnungsformel der nachstehend beschriebenen Standzeit ergibt sich als

$$Vs = \frac{Gg}{M \times Li \times T} \ [\%]$$

mit

Vs =   Sumpfvolumen [% Gesamtvolumen]

Gg =   Gesamtgehalt [mg]

M =   Migration [ppm/l]

Li =   Leerungsintervall [1/Jahre]

T =   Standzeit [Jahre]

Daraus ergibt sich für einen Verlust von 2 ppm Irgasan DP 300 pro Liter Sumpfvolumen

$$y = \frac{42,3}{x} \ [\%]$$

und entsprechend für einen Verlust von 10 ppm Irgasan DP 300

$$y = \frac{211,5}{x} \ [\%]$$

wobei

  x = Standzeit [Jahre]
  y = Sumpfvolumen [% Gesamtvolumen]

Anwendungsbeispiel:

Mit Hilfe von sensitiven mikrobiologischen Tests sollte sowohl die mikrobielle Kontamination von Prüfkörpern aus HDPE als auch die Migration des Irgasans DP 300 aus dem Kunststoff quantitativ erfaßt werden, um die Abgabe des Wirkstoffs über die Standzeit abschätzen zu können. Daneben wurde versucht, die Migration von Irgasan DP 300 und Stabilisatoren UV-spektroskopisch zu verfolgen.

Hierzu wurde zunächst ein Test etabliert, der es erlaubt, die antimikrobielle Wirkung von 0,2 % Irgasan DP 300 enthaltenden Prüfkörpern und Irgasan DP 300 Reinsubstanz quantitativ zu erfassen. Um die Migration des Additivs und die Sensitivität verschiedener Testkeime zu untersuchen, wurden Prüfkörper auf Agarplatten, die mit diesen Keimen beimpft waren, im Hemmhoftest inkubiert. Als Indikatoren wurden zwei Mikroorganismen verwendet, deren minimale Hemmkonzentration (MHK) gegen Irgasan DP 300 nach Herstellerangaben bei 0,01 ppm und 0,3 ppm liegen. Die Kinetik der Abgabe von Wirkstoff in eine wäßrige Lösung wurde durch Inkubation von Prüfkörpern in einem definierten Volumen und anschließende Auswertung sowohl spektroskopisch als auch im Hemmhoftest. ermittelt. Beide Methoden wurden mit Hilfe paralleler Ansätze mit Reinsubstanz kalibriert.

Die vorliegende Erfindung wird nunmehr durch Abbildungen (Fig.) näher erläutert.

Es zeigen

Fig. 1 eine Petrischale mit Agarnährmedium, auf die verschiedene Konzentrationen von Irgasan DP 300 nach 16 stündiger Inkubation aufgebracht worden sind.

Fig. 2 einen typischen Hemmtest mit einer Auftragung der Irgasan DP 300 (Triclosan) Konzentration in ppm gegen die Fläche in cm$^2$,

Fig. 3 die Migration aus HDPE in Wasser (im Hemmhoftest) während einer Zeit von bis zu 400 Stunden,

Fig. 4 die Auftragung der Extinktion bei 285 nm für einen Gewichtsbereich von bis zu 10 ppm,

Fig. 5 die Migration aus HDPE in Wasser (als Extinktion),

Fig. 6 die theoretische Standzeit x eines Entsorgungsbehälters oder Müllgroßbehälters (MGB 120/140) aufgetragen gegen das Sumpfvolumen y in % vom Gesamtvolumen.

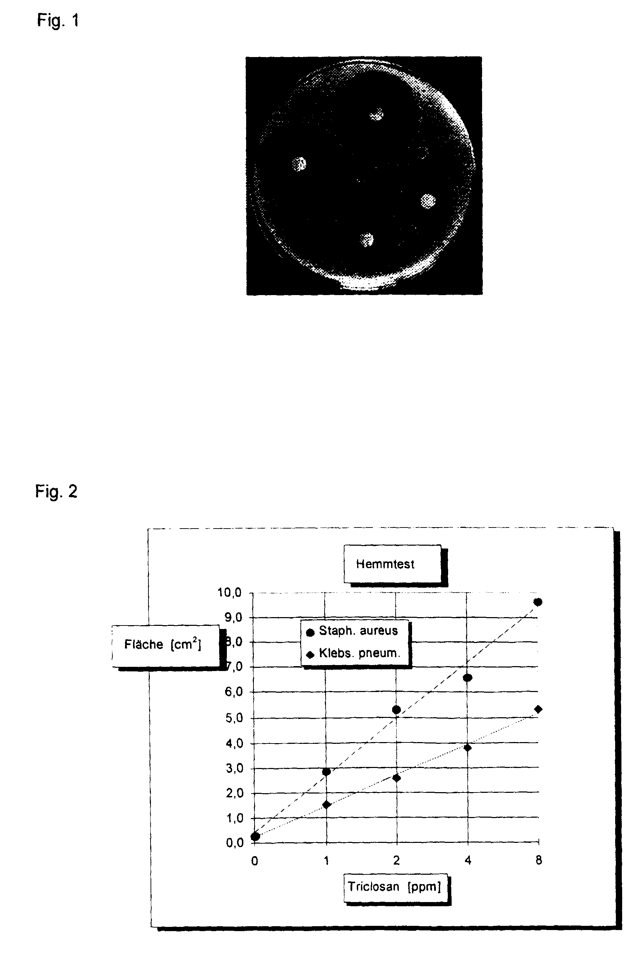

Die Fig. 1 zeigt die Abhängigkeit der Fläche der Hemmhöfe von verschiedenen Konzentrationen an Irgasan DP 300 nach etwa 16stündiger Inkubation auf Agarplatten mit Nährmedium. Die konzentrischen dunklen Ringe zeigen kein mikrobielles Wachstum. Das im Zentrum der Agarplatte gegen den Bakterienrasen nur schwach sichtbare Filter enthielt dagegen kein Irgasan DP 300.

Der Durchmesser bzw. die Fläche der Hemmhöfe verhält sich dabei proportional zur eingesetzten Konzentration, ist jedoch außerdem von der Sensibilität des jeweiligen Mikroorganismus gegen den eingesetzten Wirkstoff abhängig. Im Falle von Irgasan DP 300 können geeignete Mikroorganismen aufgrund ihrer Spezifität und Sensitivität mit den empfindlichsten chemischen Bestimmungsmethoden konkurrieren.

Da in der Regel Wechselwirkungen mit den Nährmedien anzunehmen sind, handelt es sich bei Proben unbekannter Konzentration immer um eine Relativmessung, die erst im Vergleich mit Konzentrationsreihen der Reinsubstanz Absolutwerte ergibt. Entsprechend beziehen sich die Angaben der minimalen Hemmkonzentration von Mikroorganismen immer auf ein bestimmtes Nährsubstrat.

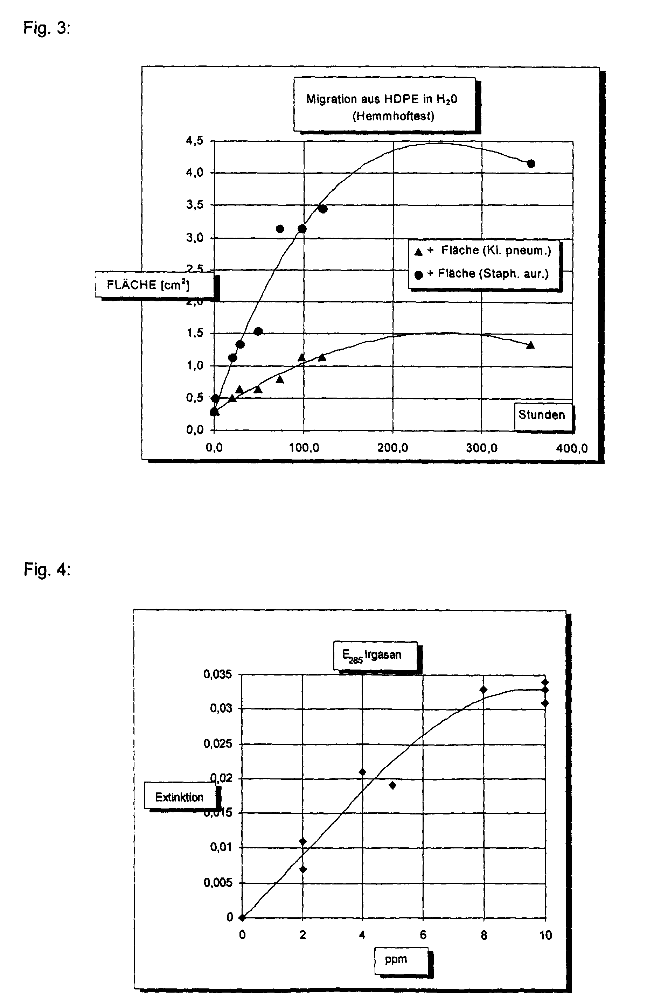

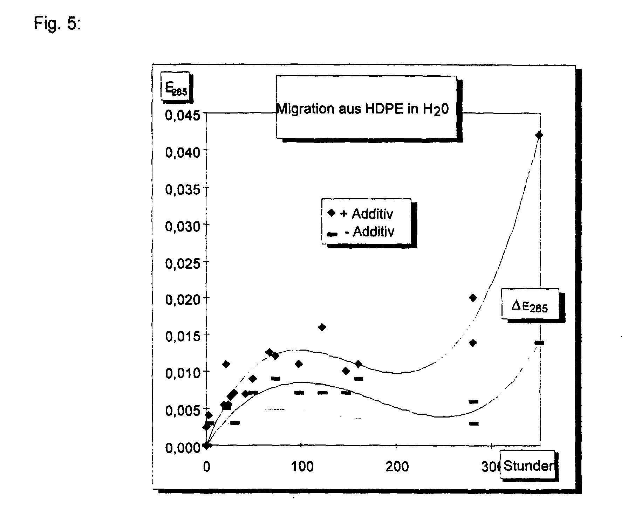

In Fig. 2 ist die Fläche der wachstumsfreien Zonen in Abhängigkeit von der Konzentration an Irgasan DP 300 (Triclosan) in ppm aufgetragen. Die Sättigungskonzentrationen von Triclosan in Wasser liegen bei Zimmertemperatur bei etwa 10 ppm, das heißt 10 mg im Liter. Die aus einem Prüfkörper definierte Oberfläche innerhalb von 14 Tagen im Wasser austretende Menge Triclosan wurde parallel mit Hilfe des Hemmhoftestes (Fig. 3) und UV-spektroskopisch (Fig. 5) bestimmt. Zur Abschätzung der Größenordnung dient der Vergleich mit der entsprechenden Reinsubstanzen (Fig. 2 und 4).

Die Differenzen ($\Delta$) der Extinktionen, die aus Versuchen mit oder ohne Triclosan erhalten wurden, streuen zwischen verschiedenen Ansätzen und innerhalb der Versuchsreihen stark. Dies ist auf die geringen Extinktionswerte, die nahe an der unteren Erfassungsgrenze liegen, und auf die geringe Spezifität der Methode, eventuell aber auch auf Inhomogenitäten bei der Verteilung des Triclosans in den Spritzgußmustern zurückzuführen.

Aus Fig. 5 läßt sich dennoch entnehmen, daß die unter optimalen Versuchsbedingungen (Rühren) innerhalb von 14 Tagen erreichbare Tricolsan-Konzentration unterhalb der Sättigungskonzentration im Wasser liegt. Die unter praktischen Bedingungen erreichbare Konzentration dürfte je nach Länge der Abfuhrintervalle zwischen 2 und 10 ppm liegen. Die nach 2 Wochen stark ansteigenden Kurven sollten nicht überbewertet werden. Sie sind auf die stark streuenden Werte und das verwendete mathematische Regressionsmodell zurückzuführen.

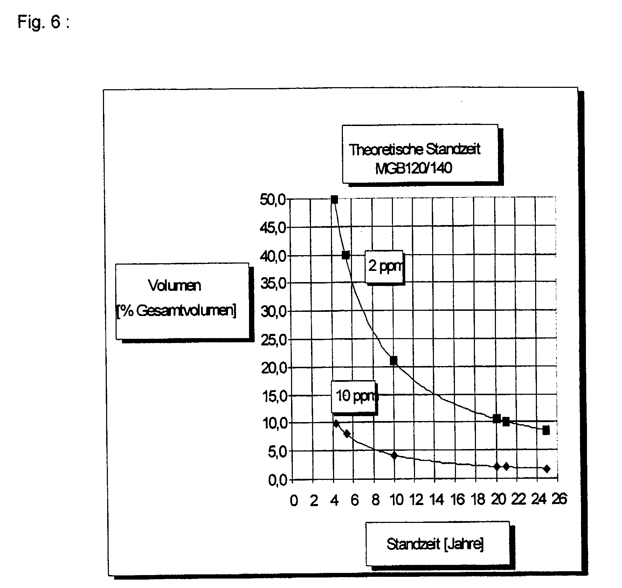

Fig. 6 zeigt die Bandbreite der gemäß vorbeschriebener Berechnungsformel resultierenden maximalen Sumpfvolumen (y) mit Gehalten zwischen 2 und 10 ppm Triclosan in Abhängigkeit von der Standzeit des Behälters (x). Als Sumpf wird die Flüssigkeit bezeichnet, die sich am Boden des Behälters sammelt.

Bei der Beurteilung der Ergebnisse muß unterschieden werden zwischen der Oberflächenwirkung und der Einwirkung auf den flüssigen und festen Behälterinhalt.

Bei der Oberfläche kann von einer Wirkung ausgegangen werden, die zumindest einer 10 ppm Lösung von Triclosan entspricht. Aufschluß über eine intensivere Wirkung, die Konzentration im HDPE liegt bei 200 ppm, können Versuche mit Mikroorganismen mit höherem MHK geben. Die Reinhaltung der Behälteroberfläche dürfte für Besiedlung bzw. Reinfektion des Behälterinhaltes eine zusätzliche Rolle spielen.

Beim Behälterinhalt ist nur im Sumpf von einer befriedigenden Wirkung auszugehen, selbst wenn die erreichbare Konzentration unter 10 ppm Triclosan liegt.

Bezüglich der erreichbaren Standzeiten zeigen die Ergebnisse, daß bereits 0,2 % Triclosan im HDPE mit einer 14tägigen Leerung auch unter ungünstigen Bedingungen eine ausreichende Wirkung nach mehr als 5 Jahren erwarten lassen. Außerdem sind die erreichbaren Konzentrationen an Triclosan im flüssigen Abfallgut im Prinzip geeignet, einen wesentlichen Teil der relevanten mikrobiellen Flora zu hemmen. Insofern erscheint Triclosan vorzüglich geeignet für einen Einsatz in Lager- und Transportbehältnissen, insbesondere aber Entsorgungsbehältnissen, beispielsweise den bekannten Bio- oder Restmüllbehältern. Auch stellt die sachgerechte Nutzung von Bioabfalltonnen, die mit Triclosan ausgerüstet sind, weder im Haushalt noch bei der anschließenden Kompostierung ein ernstzunehmendes Problem dar.

## Patentansprüche

**1.** Abfallbehälter aus einer Polymerzusammensetzung, **dadurch gekennzeichnet,** daß das Polymer ausgewählt ist aus Polyolefinen, Styrolpolymerisaten, halogenhaltigen Polymeren ausgenommen Weich-PVC, linearen Polyestern, linearen Polycarbamaten, hochtemperaturfesten Kunststoffen sowie Recyklaten dieser Kunststoffsorten, wobei sie 0,01 bis 10 Gew-%, vorzugsweise 0,05 bis 2 Gew-%, bezogen auf die Gesamtzusammensetzung, wenigstens ein Phenol in Form von halogeniertem Dihydroxydiphenylmethan, -sulfid und / oder -ether und / oder 2,4,4'-Trichlor-2'-hydroxydiphenylether enthält, ausgenommen die Dihydroxydiphenylsulfide, 2,2'-Thiobis(6-halogeno-4-$C_{1-8}$-alkylphenol) und 2,2'-Thiobis(6-halogeno-4-$C_{2-8}$-alkenylphenol).

**2.** Behälter nach Anspruch 1 , **dadurch gekennzeichnet**, daß das halogenierten Dihydroxydiphenylmethan, -sulfid und -ether ausgewählt ist aus 5,5'-Dichlor-2,2'-dihydroxy-diphenylmethan, 3,5,3',5'-Tetrachlor-4,4'-dihydroxy-diphenylmethan, 3,5,6,3',5',6'-Hexachlor-2,2'-dihydroxy-diphenylmethan, 5,5'-Dichlor-2,2'-dihydroxy-diphenylsulfid, 2,4,5,2',4',5'-Hexachlor-dihydroxy-diphenylsulfid, 3,5,3',5'-Tetrachlor-2,2'-dihydroxy-diphenylsulfid, 4,4'-Dihydroxy-2,2'-dimethyl-diphenylmethan, 2,4,4'-Trichlor-2'-hydroxy-diphenylether.

**3.** Behälter nach Anspruch 1, **dadurch gekennzeich-**

**net**, daß es sich bei dem Phenol um 2,4,4'-Trichlor-2'-hydroxydiphenylether handelt.

4. Behälter nach Anspruch 1, **dadurch gekennzeichnet,** daß es sich bei den Polymeren um ein gegebenenfalls recykliertes Polyolefin, insbesondere ein Polyethylen handelt.

5. Verwendung von Phenolen gemäß Ansprüchen 1 bis 3 in kunststoffenthaltenden Behältnissen gemäß Ansprüchen 1, oder 4 als Biozid.

**Claims**

1. Waste container made from a polymer composition, whereby the polymer is selected from among polyolefins, styrene polymers and polymers containing halogen, except for soft PVC, linear polyesters, linear polycarbamates, high-temperature- resistant plastics as well as recycled material stemming from these types of plastic, wherein it contains 0.01% to 10% by weight, preferably 0.05% to 2% by weight, of at least one phenol in the form of halogenated dihydroxydiphenyl methane, dihydroxydiphenyl sulfide, dihydroxydiphenyl ether and / or 2,4,4'-trichloro-2'-hydroxydiphenyl ether, except for the dihydroxydiphenyl sulfides, 2,2'-thiobis(6-halogen-4-$C_{1-8}$-alkyl phenol) and 2,2'-thiobis(6-halogeno-4-$C_{2-8}$-alkenyl-phenol).

2. Container according to claim 1, **characterized in that** the halogenated dihydroxydiphenyl methane, dihydroxydiphenyl sulfide or dihydroxydiphenyl ether is selected, for instance, from among 5,5'-dichloro-2,2'-dihydroxydiphenyl methane, 3,5,3',5'-tetrachloro-4,4'-di-hydroxydiphenyl methane, 3,5,6,3',5',6'-hexachloro-2-2'-dihydroxydiphenyl methane, 5,5'-dichloro-2,2'-dihydroxydiphenyl sulfide, 2,4,5,2',4', 5'-hexachloro-di-hydroxydiphenyl sulfide, 3,5,3',5--tetrachloro-2-2'-di-hydroxydiphenyl sulfide, 4,4'-dihydroxy-2,2'-dimethyl-diphenyl methane, 2,4,4'-trichloro-2'-hydroxydiphenyl ether.

3. Container according to claim 1, **characterized in that** the phenol is 2,4,4'-trichloro-2'-hydroxydiphenyl ether.

4. Container according to claim 1, **characterized in that** the polymers are optionally recycled polyolefin, especially a polyethylene.

5. Use of phenols in accordance with claims 1 to 3 as a biocide in containers containing plastic in accordance with any of claims 1 or 4.

**Revendications**

1. Récipient pour déchets constitué d'une composition de polymère, caractérisé en ce que le polymère est choisi parmi des polyoléfines, des polymères de styrène, des polymères halogénés hormis le PVC souple, des polyesters linéaires, des polycarbamates linéaires, des matières plastiques solides résistantes à hautes températures ainsi que des produits recyclés de ces types de matières plastiques, ladite composition contenant de 0,01 à 10% en poids, de préférence de 0,05 à 2% en poids par rapport à la composition totale d'au moins un phénol sous forme de dihydroxydiphénylméthane halogéné, de sulfure et/ou d'éther de dihydroxydiphényle halogéné et/ou de 2,4,4'-trichloro-2'-hydroxydiphénylyéther, à l'exclusion des sulfures de dihydroxydiphényle, d'un 2,2'-thiobis (6-halogéno-4-alkyl$_{(C1-8)}$phénol) et d'un 2,2'-thiobis (6-halogéno-4- -alcényl$_{(C2-8)}$phénol).

2. Récipient selon la revendication 1, caractérisé en ce que le dihydroxydiphénylméthane halogéné, le sulfure et l'éther de dihydroxydiphénylméthane halogéné est choisi parmi le 5,5'-dichloro-2,2'-dihydroxy-diphénylméthane, le 3,5,3',5'-tetrachloro-4,4'-dihydroxy-diphénylméthane, le 3,5,6,3',5',6'-hexachloro-2,2'-dihydroxy-diphénylméthane, le sulfure de 5,5'-dichloro-2,2'-dihydroxy-diphényle, le sulfure de 2,4,5,2',4',5'-hexachloro-dihydroxy-diphényle, le sulfure de 3,5,3',5'-tetrachloro-2,2'-dihydroxy-diphényle, le 4,4'-dihydroxy-2,2'-diméthyl-diphénylméthane, le 2,4,4'-trichloro-2'-hydroxy-diphényléther.

3. Récipient selon la revendication 1, caractérisé en ce que le phénol consiste en 2,4,4'-trichloro-2'-hydroxy-diphényléther.

4. Récipient selon la revendication 1, caractérisé en ce que le polymère consiste en une polyoléfine éventuellement recyclée, en particulier un polyéthylène.

5. Utilisation de phénols selon les revendications 1 à 3 dans des récipients contenant des matières plastiques selon les revendications 1 ou 4, en tant que biocide.

Fig. 1

Fig. 2

Fig. 3:

Migration aus HDPE in $H_2O$
(Hemmhoftest)

FLÄCHE [cm²]

▲ + Fläche (Kl. pneum.)
● + Fläche (Staph. aur.)

Stunden

Fig. 4:

$E_{285}$ Irgasan

Extinktion

ppm

Fig. 5:

Fig. 6 :